(19) Europäisches Patentamt
European Patent Office
Office européen des brevets

(11) **EP 4 435 469 A1**

(12) **EUROPEAN PATENT APPLICATION**

(43) Date of publication:
**25.09.2024  Bulletin 2024/39**

(21) Application number: **24158871.4**

(22) Date of filing: **21.02.2024**

(51) International Patent Classification (IPC):
**G01S 7/4914** (2020.01)    **G01S 7/4915** (2020.01)
**G01S 7/493** (2006.01)    **G01S 17/36** (2006.01)
**G01S 17/894** (2020.01)

(52) Cooperative Patent Classification (CPC):
**G01S 17/36; G01S 7/4914; G01S 7/4915;
G01S 7/493; G01S 17/894**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.03.2023  US 202318186802**

(71) Applicant: **Analog Devices International Unlimited
Company
Limerick (IE)**

(72) Inventors:
• **CALPE, Javier
  Co. Limerick (IE)**
• **HURWITZ, Jonathan Ephraim David
  Co. Limerick (IE)**
• **LE DORTZ, Nicolas
  Wilmington, 01887 (US)**

(74) Representative: **Yang, Shu
  Withers & Rogers LLP
  2 London Bridge
  London SE1 9RA (GB)**

(54) **A CONTINUOUS WAVE TIME OF FLIGHT SYSTEM**

(57)    There is provided a continuous wave time of flight, CW-ToF, camera system comprising: a laser for emitting laser light; an imaging sensor, the image sensor comprising a pixel array for accumulating charge based on incident light comprising reflected laser light off an object, the pixel array comprising a plurality of rows of pixels; and a control system coupled to the imaging sensor and configured to control the pixel array to: reset at least a first row and a second row of the plurality of rows, wherein the first row and the second row are adjacent one another in the pixel array; accumulate charge in the pixels of the pixel array using a first integration setting for a first time period; reset the first row of the plurality of rows; accumulate charge in the pixels of the pixel array using the first integration setting or a second integration setting for a second time period subsequent to the first time period; read out a set of charge samples, wherein the first row contains a first charge from accumulating after the second time period and the second row contains a second charge from accumulating after the first and second time periods; and use the set of charge samples to approximate a charge from sampling after the first time period.

FIG. 7

**Description**

FIELD

This application relates to a continuous wave time of flight system and, in particular but not exclusively, to a continuous wave time of flight system that uses partial resetting of pixels for determining distance to a moving object.

BACKGROUND

Time-of-flight (ToF) camera systems are range imaging systems that resolve the distance between the camera and an object by measuring the round trip of light emitted from the ToF camera system. The systems typically comprise a light source (such as a laser or LED), a light source driver to control the emission of light from the light source, an image sensor to image light reflected by the subject, an image sensor driver to control the operation of the image sensor, optics to shape the light emitted from the light source and to focus light reflected by the object onto the image sensor, and a computation unit configured to determine the distance to the object based on the emitted light and the corresponding light reflection from the object.

In a Continuous Wave (CW) ToF camera system, multiple periods of a continuous light wave are emitted from the laser. The system is then configured to determine the distance to the imaged object based on a phase difference between the emitted light and the received reflected light. CW-ToF systems often modulate the emitted laser light with a first modulation signal and determine a first phase difference between the emitted light and reflected light, before modulating the emitted laser light with a second modulation signal and determine a further phase difference between the emitted light and reflected light. In general, two or three modulation frequencies are used. A depth map/depth frame can then be determined based on the phase differences for these multiple modulation frequencies. The various modulation signals have different frequencies so that the various phase differences can be used to resolve phase wrapping.

During the time that it takes to emit the laser light and read-off the charge stored on the image sensor between each light emission, it is possible that the object being imaged will have moved, which may cause inaccuracies and/or blurring in the generated image frame. Furthermore, when the information obtained from multiple modulation frequencies are combined in order to obtain a single depth map, the time taken for this process, i.e. the exposure plus, in particular, the readout time, may cause more inaccuracies and/or blurring in the generated image frame in the event that the object has moved. Therefore, a faster CW-ToF camera system that can reduce inaccuracies and/or blurring in the generated image information is desirable.

SUMMARY OF THE DISCLOSURE

An imaging sensor is a sensor that detects and conveys image information by converting light into electrical signals. In a typical imaging sensor, there is a 2D array of pixels, and each pixel includes a photodetector and an active amplifier. Light impacting upon each pixel causes electrical charges to accumulate on the pixels and an accumulated charge is read and transferred to signal processing circuitry. The accumulated charge may then be amplified by individual amplifiers at each pixel before being output as a voltage signal.

In the context of CW-ToF camera systems, a clock generation circuit in the imaging sensor typically output timing signals for driving a laser and for reading out charge values accumulated on the pixels. Together with a converter, memory and controller, the clock generation circuit may determine depth frames by controlling laser emission, controlling the image sensor charge accumulation timing, reading out the image sensor and processing the resultant data.

The present disclosure relates to an imaging sensor for a CW-ToF camera system that, within a single image frame, involves partially resetting a subset of rows of the plurality of rows at the end of a first time period such that charge accumulates additively on the other rows of the plurality of rows that have not been reset. Then, charge samples of the rows of the pixel array are read out after a second time period and used to approximate a charge of a row that has not been reset after the first time period. Importantly, the partial reset reduces the integration time of the rows for obtaining more information than would be obtained had the rows been fully reset. Therefore, read out time is reduced, and this results in a faster CW-ToF camera system that can reduce inaccuracies and/or blurring in the generated image information, without any significant reduction in accuracy of imaging.

In a first aspect, there is provided a continuous wave time of flight, CW-ToF, camera system comprising: a laser for emitting laser light; an imaging sensor, the image sensor comprising a pixel array for accumulating charge based on incident light comprising reflected laser light off an object, the pixel array comprising a plurality of rows of pixels; and a control system coupled to the imaging sensor and configured to control the pixel array to: reset at least a first row and a second row of the plurality of rows, wherein the first row and the second row are adjacent one another in the pixel array; accumulate charge in the pixels of the pixel array using a first integration setting for a first time period; reset the first row of the plurality of rows; accumulate charge in the pixels of the pixel array using the first integration setting or a second integration setting for a second time period subsequent to the first time period; read out a set of charge samples, wherein the first row contains a first charge from accumulating after the second time period and the second row contains a second charge from accumulating after the first and second time periods; and use the set of charge samples to approximate a charge from sampling after the first time period.

In a second aspect, there is provided a method of reading out a pixel array of an imaging sensor of a continuous wave time of flight, CW-ToF, camera system, the pixel array comprising a plurality of rows of pixels, the method comprising: resetting at least a first row and a second row of the plurality of rows, wherein the first row and the second row are adjacent one another in the pixel array; accumulating charge in the pixels of the pixel array using a first integration setting for a first time period; resetting the first row of the plurality of rows; accumulating charge in the pixels of the pixel array using the first integration setting or a second integration setting for a second time period subsequent to the first time period; reading out a set of charge samples, wherein the first row contains a first charge from accumulating after the second time period and the second row contains a second charge from accumulating after the first and second time periods; and using the set of charge samples to approximate a charge from sampling after the first time period.

In a third aspect, there is provided a method of reading out pixel array of an imaging sensor of a continuous wave time of flight, CW-ToF, camera system, the pixel array comprising a plurality of rows of pixels, the method comprising: resetting at least a first row and a second row of the plurality of rows, wherein the first row and the second row are adjacent one another in the pixel array; accumulating charge in the pixels of the pixel array using a first integration setting for a first time period; resetting the first row of the plurality of rows; accumulating charge in the pixels of the pixel array using the first integration setting or a second integration setting for a second time period subsequent to the first time period; reading out a set of charge samples, wherein the first row contains a first charge from accumulating after the second time period and the second row contains a second charge from accumulating after the first and second time periods; and using the set of charge samples to approximate a charge from sampling after the first time period by subtracting the second charge from the first charge to approximate the charge accumulated on the first row after the first time period.

Definitions

An imaging sensor comprises a plurality of pixels in rows and columns that accumulate charge based on incident light over an accumulation period. Rows and columns of the imaging sensor are addressable and typically the imaging sensor may have an output amplifier and ADC per column, with pixel charges being read out row-by-row by sampling voltages that are proportional to light intensity. A 'row' may be defined as a plurality of pixels that are read out as a line and images are formed by scanning pixel lines to read out rows. Once a row has been read out, the pixels may be reset or in other words the accumulated charges may be cleared for the next image frame. It is to be understood that the term 'row' has no implication on the physical orientation of the pixels, i.e. it has no implication on whether the line is oriented horizontally or vertically.

The imaging sensor could be a CMOS imaging sensor. Alternatively, the imaging sensor could be another type of active pixel imaging sensor.

'Progressive scanning' involves scanning a first pixel line, then a second pixel line then a third pixel line etc. This continues until the entire image frame has been scanned. In the context of the present disclosure, interleaved scanning is performed. Consecutive rows of the imaging sensor may be categorised as 'odd rows' and 'even rows', or 'odd-numbered lines' and 'even-numbered lines', whereby odd rows are reset when even rows are not reset, or vice versa. This is termed 'partial resetting' in the present disclosure. Then, during read out, the odd and even rows are combined to create the entire image frame to approximate a charge of a row that has not been reset after the first time period.

A 'single-ended' pixel is one whereby the pixel is not divided into different areas and one signal is read out from each pixel. Thus, the entire pixel accumulates charge over a time period and then that charge is read out as a voltage.

A 'differential pixel' is one whereby the pixel is divided into different areas and a differential signal is readout from each imaging pixel. For example, the differential pixel could be split into two different areas operated in anti-phase such that when one area is accumulating charge, the other area is not, and vice versa. The accumulated charges may be readout as differential voltages, amplified by the differential amplifiers and digitally converted by the ADCs before onward processing by the memory, processor and controller. In the context of the present disclosure, the two different areas are driven by a common clock.

An 'integration setting' may be defined as an integration period or a phase of the emitted light over which integration occurs. For example, the integration setting may be the first part/interval of the period/cycle of the first laser light (0° to 180°, or 0 to $\pi$), in which case the imaging sensor may be controlled to "open its shutter" for charge accumulation at the times when the phase of the emitted first laser light is between 0° to 180°.

FIGURES

Aspects of the present disclosure are described, by way of example only, with reference to the following drawings, in which:

Figure 1 is a schematic representation of a CW-ToF imaging system in accordance with an aspect of the present disclosure;
Figure 2 is a schematic representation of how the CW-ToF imaging system of

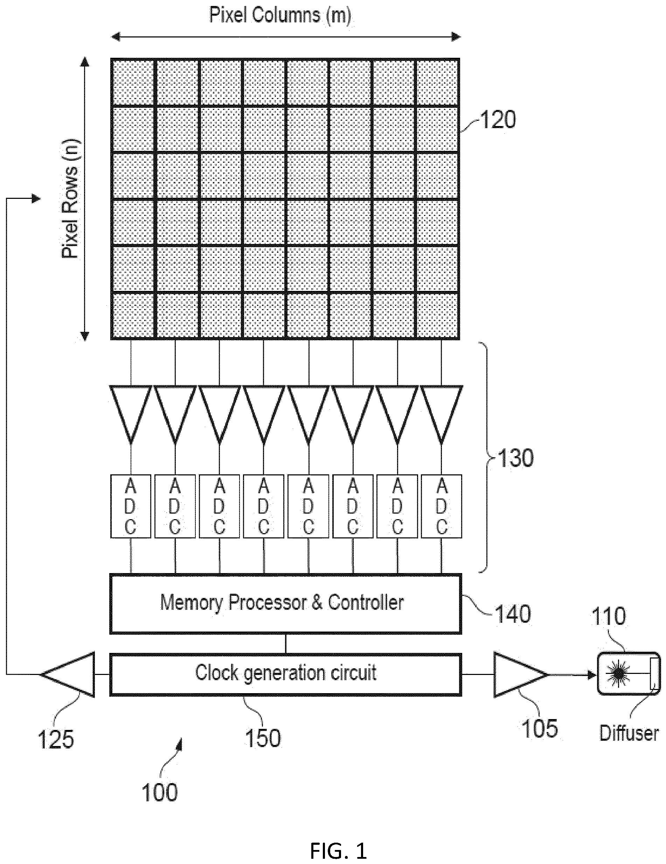

Figure 1 may be operated to accumulate and readout charge from the imaging sensor;

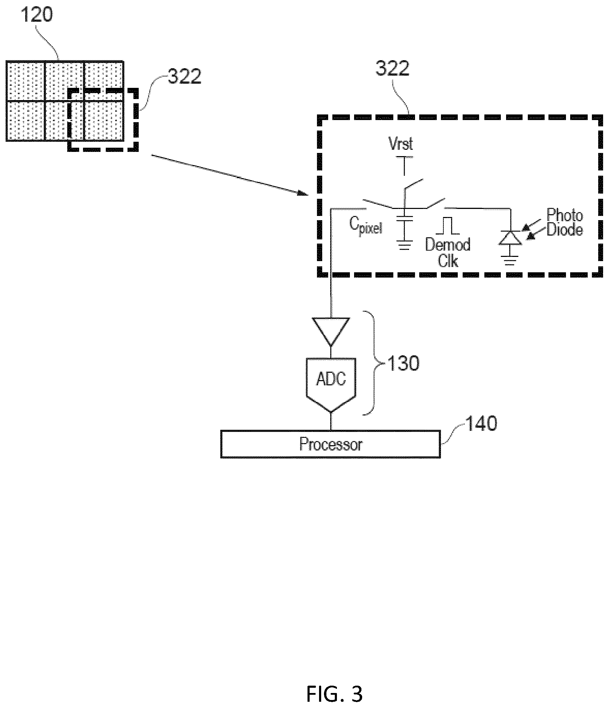

Figure 3 shows example details of a simplified single ended pixel model for a CMOS image sensor;

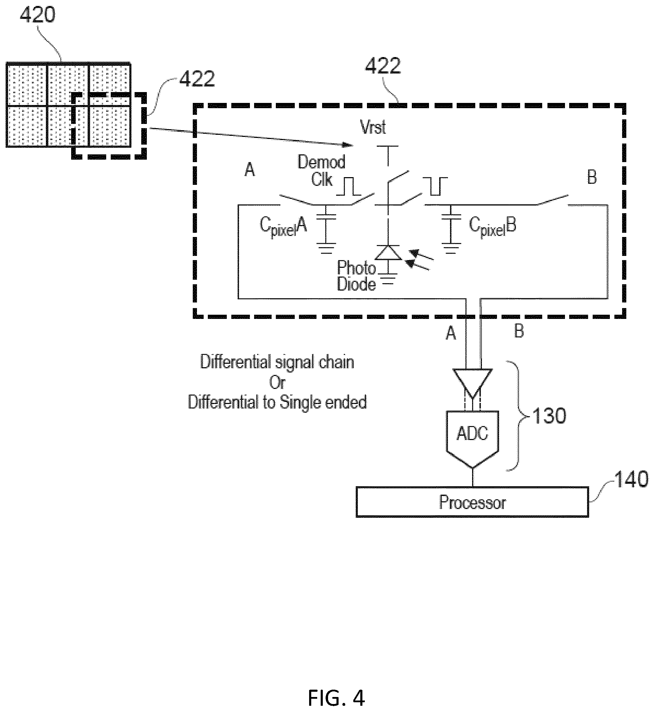

Figure 4 shows example details of a simplified differential pixel model for a CMOS image sensor;

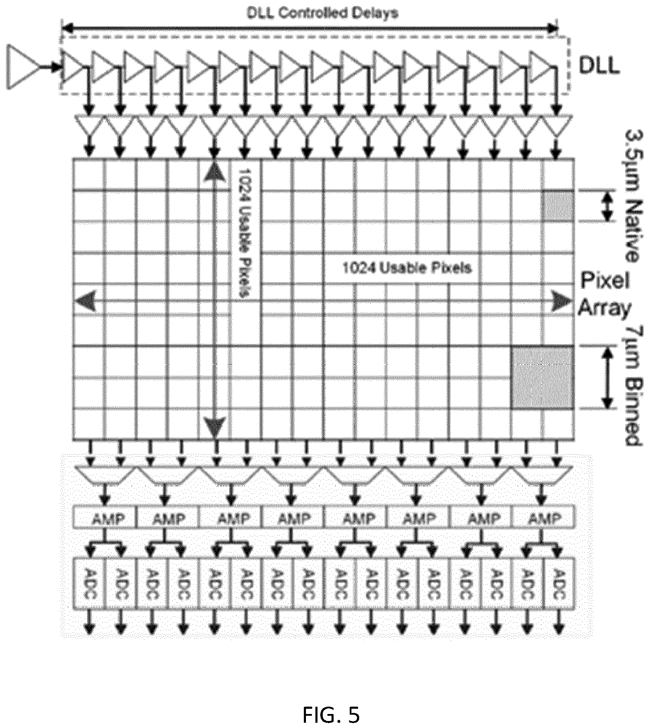

Figure 5 is a schematic representation of a plurality of pixels of an imaging sensor of a CW-ToF imaging system in accordance with a further aspect of the present disclosure;

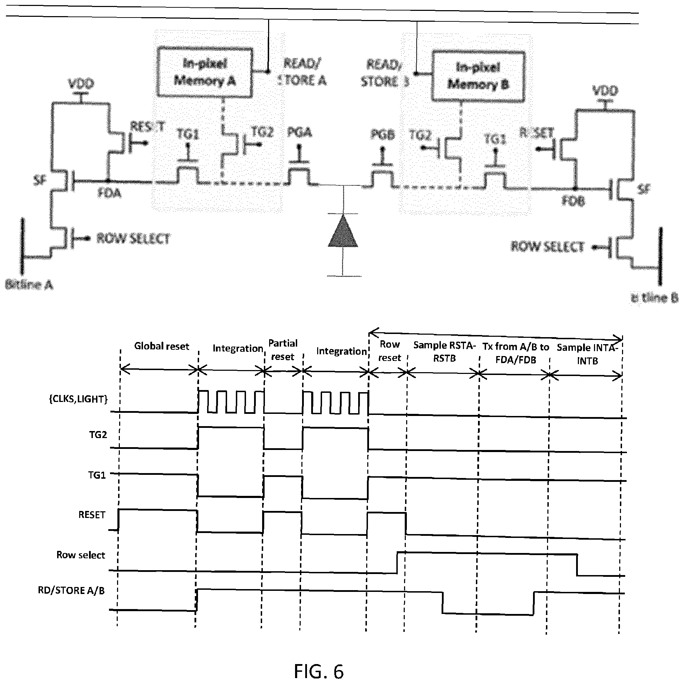

Figure 6 is a schematic representation of a plurality of pixels of an imaging sensor of a CW-ToF imaging system in accordance with a further aspect of the present disclosure;

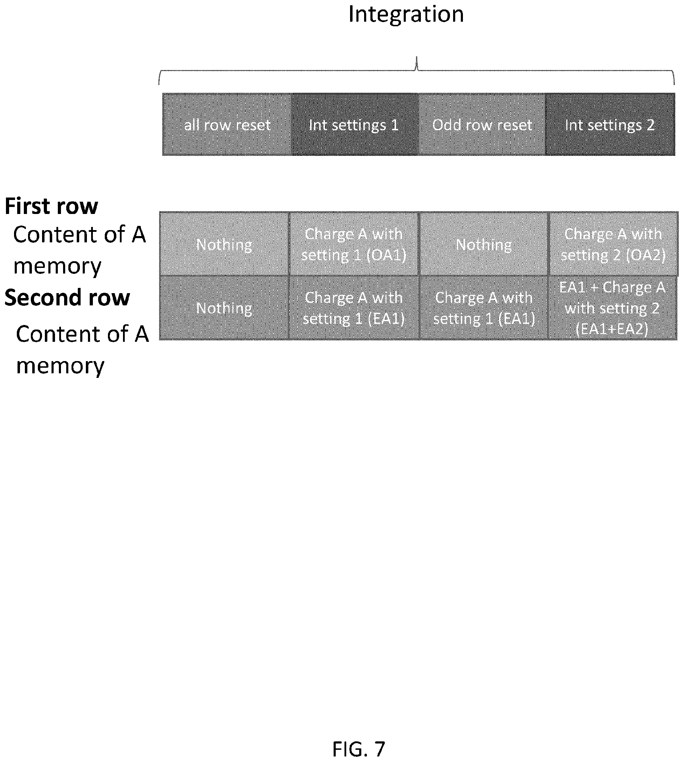

Figure 7 shows the integration aspect in accordance with a further aspect of the present disclosure;

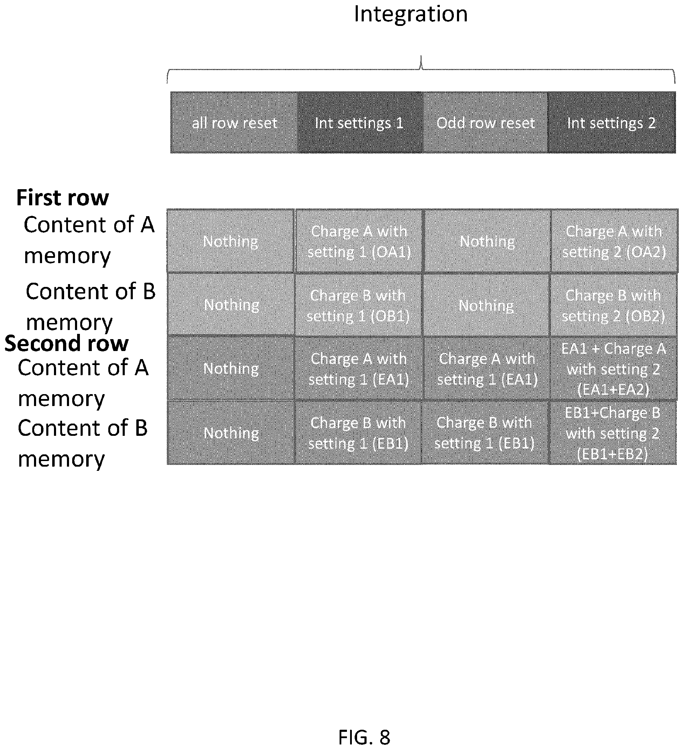

Figure 8 shows the integration aspect in accordance with a further aspect of the present disclosure;

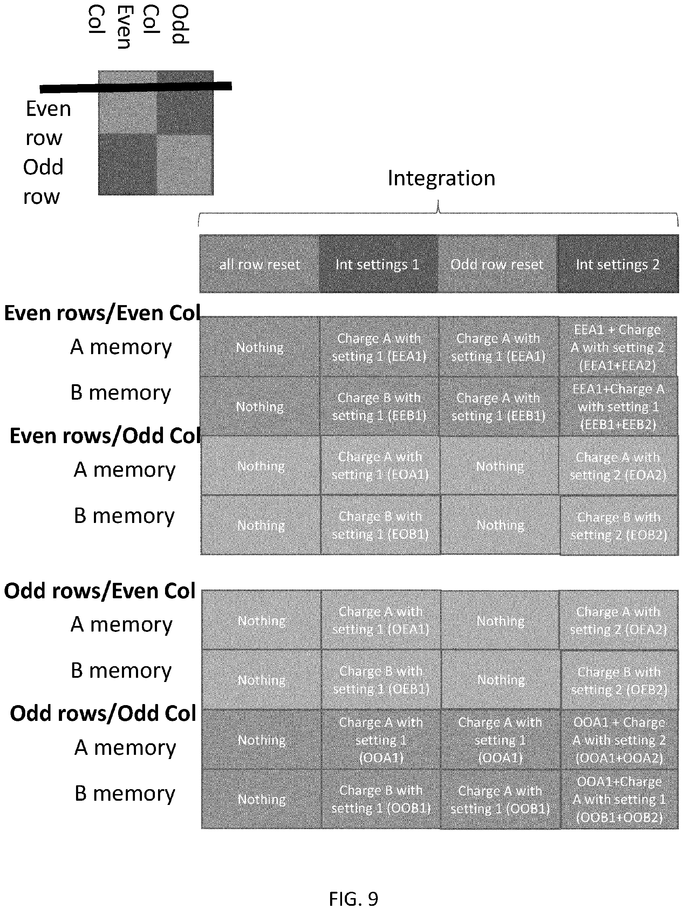

Figure 9 shows the integration aspect in accordance with a further aspect of the present disclosure;

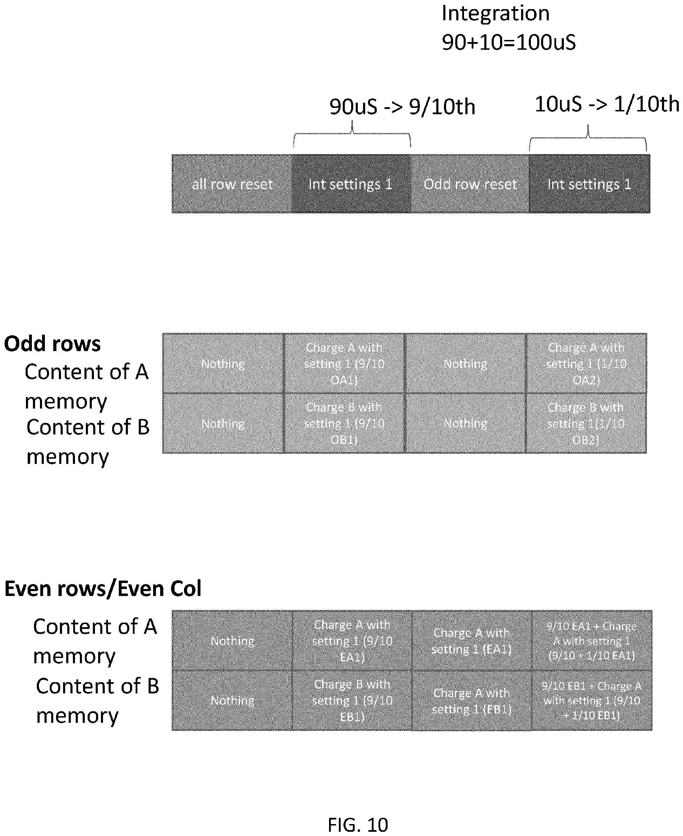

Figure 10 shows the integration aspect in accordance with a further aspect of the present disclosure;

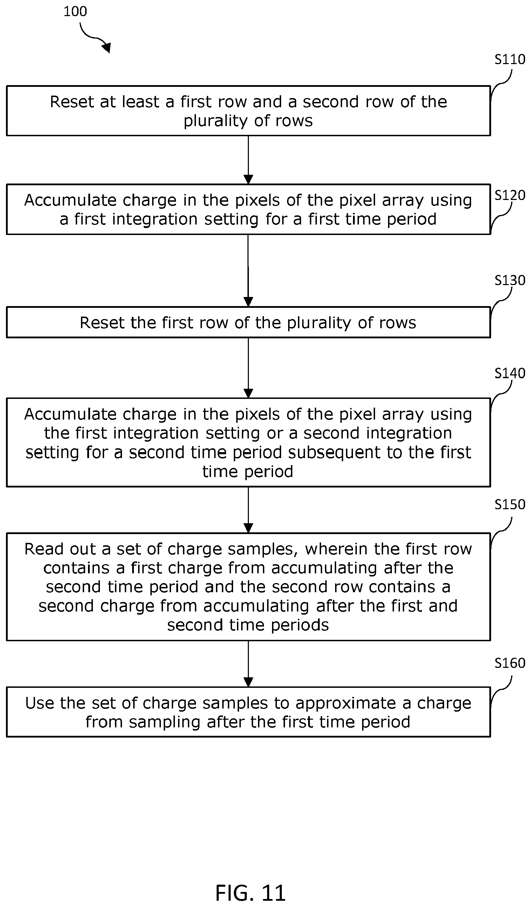

Figure 11 represents example method steps according to an aspect of the present disclosure; and

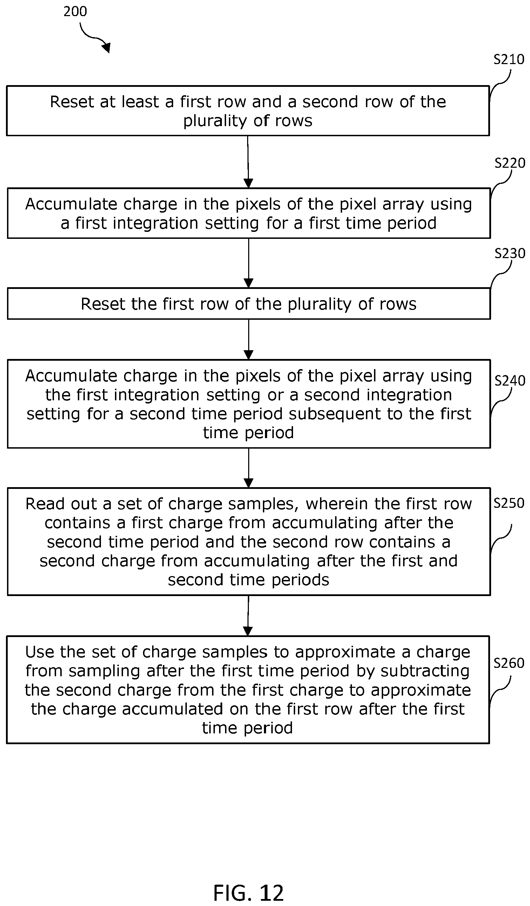

Figure 12 represents example method steps according to an aspect of the present disclosure.

DETAILED DESCRIPTION

As described in the background section, CW-ToF camera systems are configured to modulate emitted laser light with a modulation signal and determine a first phase difference between the emitted light and reflected light. Phase unwrapping can then be performed using the determined phase difference and a depth map/depth frame can be determined. The present inventors have realised that inaccuracies and/or blurring in the generated image frame may be reduced by reducing the number of read out instances. Instead, the present inventors have recognised that by partially resetting a subset of rows of the plurality of rows such that charge accumulates additively on the other rows of the plurality of rows that have not been reset, more than one piece of information can be deduced from a single read out, and thus the CW-ToF camera system can produce depth images with reduced inaccuracies and/or blurring in the generated image information since integration time may be reduced. The way in which the present disclosure achieves this effect is by sacrificing spatial resolution for speed. In other words, by resetting a row adjacent to another row that is not reset or by resetting every other row of a plurality of rows whereby the remaining rows are not reset, and approximating accumulated charge preceding the partial reset, the overall integration time of the rows is reduced for obtaining the same information as would be obtained if all of the rows had been reset.

The present disclosure may be particularly relevant in several applications. For example, one application could be to generate depth information. In particular, for moving objects, such as in conveyor belt applications, the present disclosure proposes techniques to allow reduced read out times for obtaining an image frame. By resetting a row adjacent to another row that is not reset or by resetting every other row of a plurality of rows whereby the remaining rows are not reset, approximating accumulated charge preceding the partial reset, and using different integration settings to read out the partially reset and fully reset rows, respectively, the integration read out time is reduced. The techniques of the present disclosure can also be extended to scenarios where a high dynamic range in a single image frame is required, for images that include both highly and lowly reflective objects. By resetting a row adjacent to another row that is not reset or by resetting every other row of a plurality of rows whereby the remaining rows are not reset, approximating accumulated charge preceding the partial reset, and using different integration times to read out the partially reset and fully reset rows, respectively, the row(s) that is not reset may be optimised for high light level pixels whereas the row(s) that is reset may be optimised for low light level pixels.

In one example, a laser emits light and an imaging sensor comprises a pixel array for accumulating charge based on incident light comprising reflected light off an object, the pixel array comprising a plurality of rows of pixels. A control system is coupled to the imaging sensor and it controls the pixel array to perform a series of resets of the rows. The first reset involves at least a first row and a second row, wherein the first row and the second row are adjacent one another in the pixel array, then charge accumulates on the pixels of the pixel array using a first integration setting after a first time period. The second reset involves the first row only, leaving the second row of the plurality of rows containing the previously accumulated charge, then charge accumulates on the pixels of the pixel array using the first integration setting or a second integration setting after a second time period subsequent to the first period of time. Then, a set of charge samples are read out, the first row containing a first charge from accumulating after the second time period and the second row containing a second charge from accumulating after the first and second time periods. Finally, the set of charge samples is used to approximate a charge from sampling after the first time period. Thus, a single read out contains information after each the first and second time periods, or of each the first and second integration settings. Pixels of the first row and pixels of the second row are differential pixels each having two or more areas that accumulate charge during different accumulation periods. The two or more areas of each pixel are driven by a common clock. Thus, the integration periods between the areas of the pixel are synchronised.

In another example, a laser emits light and an imaging sensor comprises a pixel array for accumulating charge based on incident light comprising reflected light off an object, the pixel array comprising a plurality of rows of pixels. A control system is coupled to the imaging sensor and it controls the pixel array to perform a series of resets of the rows. The first reset involves at least a first row and a second row, wherein the first row and the second row are adjacent one another in the pixel array, then charge accumulates on the pixels of the pixel array using a first integration setting after a first time period. The second reset involves the first row only, leaving the second row containing the previously accumulated charge, then charge accumulates on the pixels of the pixel array using the first integration setting or a second integration setting after a second time period subsequent to the first period of time. Then, a set of charge samples are read out, the first row containing a first charge from accumulating after the second time period and the second row containing a second charge from accumulating after the first and second time periods. Finally, the set of charge samples is used to approximate a charge from sampling after the first time period by subtracting the second charge from the first charge to approximate the charge accumulated on the first row after the first time period. Thus, a single read out contains information after each the first and second time periods, or of each the first and second integration settings.

These examples are particularly advantageous for imaging moving objects since reduced read out time leads to reduced blurring in the image frame. These examples are also particularly advantageous for imaging scenes with a high dynamic range, having high light level pixels and low light level pixels that are read out simultaneously since the first row may be optimised for high light level pixels whereas the second row may be optimised for low light level pixels.

Figure 1 shows an example representation of a CW-ToF camera system 100. The system 100 comprises a laser 110 (which may be any suitable type of laser, for example a VCSEL) and a laser driver 105 configured to drive the laser 110 into light emission.

The system 100 also comprises an imaging sensor 120 that comprises a plurality (in this case m x n) of imaging pixels. A converter system 130 (comprising a plurality of amplifiers and ADCs) is coupled to the imaging sensor 120 for reading off image sensor values (for example, voltages) that are indicative of charge accumulated on the imaging pixels, and digitally converting the read off values, which are output to the memory processor & controller 140. The memory processor & controller 140 may be configured to determine depth frames (also referred to as depth maps), indicative of distance to the object being imaged, based on the received digital values indicative of charge accumulated on the imaging pixels. The memory processor & controller 140 may also be configured to determine active brightness frames (also referred to as 2D IR frames/images). Alternatively, the memory processor & controller 140 may be coupled to a processor via a data base (not shown in the figure) and output the acquired digital values for use by the processor in determining depth frames and/or 2D IR frames. The memory processor & controller 140 controls a clock generation circuit 150, which outputs timing signals for driving the laser 110 and for reading charge off the imaging sensor 120. The converter system 130, memory processor & controller 140 and clock generation circuit 150 may together be referred to as an image acquisition system, configured to determine one or more depth frames by controlling the laser 110 emission, controlling the image sensor 120 charge accumulation timing (via a buffer/amplifier 125), reading off the image sensor 120 and processing the resultant data.

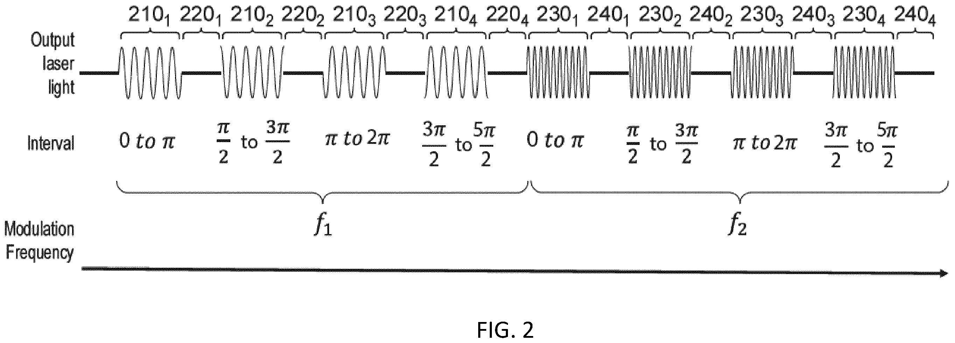

Figure 2 shows an example schematic diagram to help explain the operation of the system 100. The memory processor & controller 140 and clock generation circuit 150 control the laser 110 to output first laser light modulated by a first modulation signal having a first frequency $f_1$ for an accumulation period of time $210_1$. During this period of time, some of the first laser light reflected from the object will be incident on the imaging sensor 120. During the accumulation period of time $210_1$, the memory processor & controller 140 and clock generation circuit 150 also controls the imaging sensor 120 to accumulate charge based on the incident reflected first laser light for the first part/interval of the period/cycle of the first laser light ($0°$ to $180°$, or 0 to $\pi$). For example, the imaging sensor 120 is controlled to "open its shutter" for charge accumulation at the times when the phase of the emitted first laser light is between $0°$ to $180°$. This is so that the phase of the received first laser light relative to the emitted first laser light at a first interval of 0 to $\pi$ may later be determined using the charge accumulated on the imaging sensor 120, for example by cross correlating the accumulated charge signal with the first modulation signal. In this example, accumulation takes place for half of the period/cycle of the first laser light, but may alternatively take place for any other suitable amount of time, for example for one quarter of the phase of the first laser light. The skilled person will readily understand how to control the accumulation timing of the imaging sensor 120 using control signals based on the timing of the laser modulation signal. As will be understood by the skilled person, if the image sensor 120 is a single ended pixel type, the pixels may be controlled to accumulate charge for this part/interval of the period and not accumulate any charge for the remainder of the period. If the image sensor 120 is a differential pixel type, the pixels may be controlled to accumulate charge for this part/interval of the period on one side of the pixel and accumulate charge on the other side of the pixel for the remainder of the period. This also applies to the other accumulation parts/intervals described later.

During a subsequent read out period of time $220_1$, the memory processor & controller 140 and clock generation circuit 150 control the first laser $110_1$ to cease emitting light and control readout image sensor values that are indicative of the charge accumulated in the imaging pixels of the imaging sensor 120. The nature of the readout values will depend on the technology of the imaging sensor 120. For example, if the imaging sensor is a CMOS sensor, voltage values may be readout, where each voltage value is dependent on the charge accumulated in an imaging pixel of the imaging sensor 120, such that the readout values are each indicative of charge accumulated in imaging pixels of the imaging sensor 120. In other sensor technologies, the nature of the readout values may be different, for example charge may be directly readout, or current, etc. For example, the imaging sensor 120 may be controlled to readout image sensor values from row-by-row using any standard readout process and circuitry well understood by the skilled person. In this way, a sample of charge accumulated by each imaging pixel during the period $210_1$ may be read off the imaging sensor 120, converted to a digital value and then stored by the memory processor & controller 140. The group of values, or data points, arrived at the conclusion of this process is referred to in this disclosure as a charge sample.

It will be appreciated that the accumulation period of time $210_1$ may last for multiple periods/cycles of the first modulation signal (as can be seen in Figure 1) in order to accumulate sufficient reflected light to perform an accurate determination of the phase of the received reflected light relative to the first modulation signal, for the interval 0 to $\pi$ of the first modulation signal.

During accumulation period of time $210_2$, the memory processor & controller 140 and clock generation circuit 150 again control the first laser $110_1$ to output first laser light modulated by the first modulation signal for an accumulation period of time $210_2$. This is very similar to the accumulation period $210_1$, except during accumulation period of time $210_2$ the memory processor & controller 140 and clock generation circuit 150 controls the imaging sensor 120 to accumulate charge for the second part/interval of the period/cycle of the first modulation signal is delayed with respect to the previous integration (for example, 90° to 270°, or $\pi/2$ to $3\pi/2$). The readout period $220_2$ is very similar to period $220_1$, except the obtained charge sample relates to a shifted or delayed interval of $\pi/2$ to $3\pi/2$ of the first modulation signal.

Accumulation period of time $210_3$ is very similar to the period $210_2$, except the memory processor & controller 140 and clock generation circuit 150 controls the imaging sensor 120 to accumulate charge for the third part/interval of the period/cycle of the first modulation signal (180° to 360°, or $\pi$ to $2\pi$). The readout period $220_3$ is very similar to period $220_2$, except the sampled charge data relates to a shifted or delayed interval of $\pi$ to $2\pi$ of the first modulation signal.

Finally, accumulation period of time $210_4$ is very similar to the period $210_3$, except the memory processor & controller 140 and clock generation circuit 150 also controls the imaging sensor 120 to accumulate charge based on the incident reflected first laser light for a fourth part/interval of the period/cycle of the first modulation signal (270° to 90°, or $3\pi/2$ to $\pi/2$). The readout period $220_4$ is very similar to period $220_3$, except the charge sample relates to a shifted or delayed interval of $3\pi/2$ to $\pi/2$ (or, put another, a shifted or delayed interval of $3\pi/2$ to $5\pi/2$).

It can be seen from the above that for each accumulation period $210_1$-$210_4$, the start timing of pixel accumulation timing relative to the laser modulation signal is shifted (i.e., the relative phase of the laser modulation signal and the pixel demodulation signal, which controls pixel accumulation timing, is shifted). This may be achieved either by adjusting the pixel demodulation signal or by adjusting the laser modulation signal. For example, the timing of the two signals may be set by a clock and for each of the accumulation periods $210_1$-$210_4$, either the laser modulation signal or the pixel demodulation signal may be incrementally delayed by $\pi/2$.

Whilst in this example each accumulation period $210_1$-$210_4$ lasts for 50% of the period of the laser modulation signal (i.e., for 180°), in an alternative, each accumulation period may be shorter, for example 60°, or 90°, or 120°, etc, with the start of each accumulation period relatively offset by 90° as explained above.

After completing this, four samples of data (charge samples) have been acquired and stored in memory. They together may be referred to as a first set of charge samples. Immediately after the read out period $220_4$, or at some later time, a phase relationship between the first laser light and the received reflected light may be determined using the four charge samples (for example by performing a discrete Fourier transform (DFT) on the samples to find the real and imaginary parts of the fundamental frequency, and then determining the phase from the real and imaginary parts, as will be well understood by the skilled person). This may be performed by the image acquisition system, or the charge samples may be output from the distance determination system to an external processor via a data bus for the determination of the phase relationship. Optionally, active brightness (2D IR) may also be determined (either by the distance determination system or the external processor) for the reflected first laser light using the four samples (for example, by determining the magnitude of the fundamental frequency from the real and imaginary parts, as will be well understood by the skilled person).

Whilst in this example four samples of data are obtained by having four accumulation periods $210_1$-$210_4$, for some types of imaging pixel the same number of samples may be obtained from fewer accumulation periods. For example, if the imaging pixels are differential pixels, or two tap pixels, one half of each pixel may be readout for the sample relating to accumulation interval 0° to 180°, and the other half may be readout for accumulation interval 180° to 360°. Therefore, two samples may be obtained from a single accumulation period $210_1$ and readout $220_1$. Likewise, two samples for 90° to 270° and 270° to 450° may be obtained from a single accumulation period $210_2$ and readout $220_2$. In a further example, if four tap imaging pixels are used with the start of accumulation on each relatively offset by 90°, all four samples may be obtained from a single accumulation period and readout. However, even when two or more samples may be obtained for two or more different phase off-sets in a single accumulation period and readout, optionally multiple accumulation periods and readouts may still be performed, with each phase offset being moved around the available accumulation region of each imaging pixel for each successive accumulation periods, in order to correct for pixel imperfections. For example, for a four tap imaging pixel, there may be four accumulation periods and readouts with the phase offsets being successively moved around the four accumulation regions of each pixel, resulting in four samples for each phase offset, each sample being readout from a different accumulation region of the pixel, meaning that pixel imperfections can be corrected using the samples.

The skilled person will readily understand that using DFT to determine the phase relationship between the first emitted laser light and the received reflected laser light, and to determine active brightness, is merely one example and that any other suitable alternative technique may be used. By way of brief explanation a further non-limiting example is now described.

The transmitted, modulated laser signal may be described by the following equation:

$$s(t) = A_s sin(2\pi f t) + B_s$$

Where:

s(t) = optical power of emitted signal
f = laser modulation frequency
$A_s$ = amplitude of the modulated emitted signal
$B_s$ = offset of the modulated emitted signal

The signal received at the imaging sensor may be described by the following equation:

$$r(t) = \alpha(A_s sin(2\pi f t + \Phi) + B_s) + B_{env}$$

$$\Phi = 2\pi f \Delta$$

$$\Delta = \frac{2d}{c}$$

Where:

r(t) = optical power of received signal
$\alpha$ = attenuation factor of the received signal
$\Phi$ = phase shift
$B_{env}$ = amplitude of background light
$\Delta$ = time delay between emitted and received signals (i.e., time of flight)
d = distance to imaged object
c = speed of light

Accumulation timing of the imaging pixels may be controlled using a demodulation signal, $g(t - \tau)$, which is effectively a time delayed version of the illumination signal.

$$g(t - \tau) = A_g \sin(2\pi f(t - \tau)) + B_g$$

Where:

$\tau$ = a variable delay, which can be set to achieve the phase delays/offsets between each accumulation period $210_1$-

$210_4$ described above

$A_g$ = amplitude of the demodulation signal

$B_g$ = offset of the demodulation signal

The imaging pixels of the imaging sensor effectively multiply the signals r(t) and $g(t - \tau)$. The resulting signal may be integrated by the imaging pixels of the imaging sensor to yield a cross correlation signal $c(\tau)$:

$$c(\tau) = A sin\big(2\pi f(t - \tau)\big) + B$$

By driving the imaging sensor to accumulate at different offsets during different accumulation periods, as described above, it is possible to measure correlation at different time offsets $\tau$ (phase-offsets $\varphi$) 0, $\pi/2$, $\pi$, $3\pi/2$:

$$c(\tau) = A sin\big(2\pi f(t - \tau)\big) + B = A sin(\Phi - \varphi) + B$$

$$c(\tau) = A(sin(\Phi)\cos(-\varphi) + cos(\Phi) sin(-\varphi)) + B$$

$$c(0) = A1 = A(sin(\Phi)) + B$$

$$c\left(\frac{\pi}{2}\right) = A2 = -A(\cos(\Phi)) + B$$

$$c(\pi) = A3 = -A(sin(\Phi)) + B$$

$$c\left(\frac{3\pi}{2}\right) = A4 = A(\cos(\Phi)) + B$$

From these readings, it can be determined that the phase offset/time of flight can be found by:

$$\Phi = 2\pi f \Delta = \arctan\left(\frac{\sin(\Phi)}{\cos(\Phi)}\right) = atan\left(\frac{A1 - A3}{A4 - A2}\right)$$

Therefore, a depth image or map can be determined using the four charge samples acquired from the image sensor.

An active brightness, or 2D IR, image/frame may also be determined by determining

$$\sqrt{(A4 - A2)^2 + (A1 - A3)^2}$$ .

Subsequently, the process described earlier in relation to periods $210_1$-$210_4$ and $220_1$-$220_4$ may then be repeated in accumulation periods $230_1$-$230_4$ and read out periods $240_1$-$240_4$. These are the same as the accumulation periods $210_1$-$210_4$ and read out periods $220_1$-$220_4$, except rather than driving the laser $110_1$ to emit light modulated with the first modulation signal, the laser 110 is driven to emit light modulated with a second modulation signal. The second modulation signal has a second frequency $f_2$, which is higher (or in some examples, different) than the first frequency $f_1$. As a result, four further samples of data (charge samples) are obtained and stored in memory. Based on these charge samples, a phase relationship between the second laser light and the received reflected light (and optionally also the active brightness for the reflected second laser light) may be determined either by the distance determination system or the external processor, for example using DFT or correlation function processes as described above.

Using the determined phase relationship between the first laser light and the received reflected light and the determined phase relationship between the second laser light and the received reflected light, phase unwrapping may be performed and a single depth image/frame determined by the memory processor & controller 140 (as will be understood by the skilled person). In this way, any phase wrapping issues can be resolved so that an accurate depth frame can be determined. This process may be repeated many times in order to generate a time series of depth frames, which may together form a video.

Optionally, a 2D IR frame may also be determined using the determined active brightness for the first laser light and/or the determined active brightness for the second laser light.

The inventors have recognised that the above described process for acquiring a first set of charge samples (which includes accumulation periods $210_1$-$210_4$ and read out periods $220_1$-$220_4$) and acquiring a second set of charge samples (which includes accumulation periods $230_1$-$230_4$ and read out periods $240_1$-$240_4$) takes a relatively large amount of time. For example, each accumulation period may last in the region of about $100\mu s$ and each read out period may last in the region of about 3ms, such that the entire process lasts in the region of 19ms. During this time, the object being imaged may move relative to the camera system 100, such that the finally determined depth frame may have a blurred image of the object and/or have some inaccuracies. Furthermore, they have recognised the above described processes may require fairly significant energy consumption, which may be particularly significant if the system 100 is implemented within a battery operated device, such as a smartphone or tablet.

The present inventors have identified that partial resetting of a subset of rows of the plurality of rows such that charge accumulates additively on the other rows of the plurality of rows that have not been reset, more than one piece of information can be deduced from a single read out and thus the CW-ToF camera system can produce depth images with reduced inaccuracies and/or blurring in the generated image information since integration time may be reduced. The way in which the present disclosure achieves this effect is by sacrificing spatial resolution for speed. In other words, by resetting a row adjacent to another row that is not reset or by resetting every other row of a plurality of rows whereby the remaining rows are not reset, and approximating accumulated charge preceding the partial reset, the overall integration time of the rows is reduced for obtaining the same information as would be obtained if all of the rows had been reset.

Two types of pixels that examples of the present disclosure use will now be described for context in relation to Figures 3 and 4.

In Figure 1, the image sensor 120 is a single-ended pixel readout design, such that during readout, one single ended signal is read out from each imaging pixel. Figure 3 shows example details of a simplified single ended pixel model for a CMOS image sensor. An example configuration of one imaging pixel 322 is represented in the figure. Rows and columns of the imaging sensor 120 are addressable and typically the camera system 100 may have an amplifier and ADC per column, with pixel charges being readout row by row. Correlated double sampling may be performed to minimise kTC noise.

However, image sensors may alternatively have a differential pixel readout design, such that during readout, a differential signal is readout from each imaging pixel.

Figure 4 shows example details of a simplified differential pixel model for a CMOS image sensor 420. An example configuration of one imaging pixel 422 is represented in the figure. In this example, the amplifiers that are part of the readout circuitry 130 are differential amplifiers. Again, rows and columns of the imaging sensor 120 are addressable and typically the camera system 100 may have an amplifier and ADC per column, with pixel charges being readout row by row. For a CW ToF camera system, side A and side B may be operated in anti-phase, such that when $C_{pixel}A$ is accumulating charge, $C_{pixel}B$ is not, and vice-versa. The differential pixels 422 may accumulate charges on alternate sides A and B. For example $C_{pixel}A$ may accumulate charge during the interval 0 to $\pi$ and $C_{pixel}B$ may accumulate charge during the interval $\pi$ to 0 during the accumulation periods $210_1$ and $230_1$. $C_{pixel}A$ may accumulate charge during the interval $\frac{\pi}{2}$ to $\frac{3\pi}{2}$ and $C_{pixel}B$ may accumulate charge during the interval $\frac{3\pi}{2}$ to $\frac{\pi}{2}$ during the accumulation periods $210_2$ and $230_2$, etc. The accumulated charges may be readout during the readout periods $220_1$-$220_4$ and $240_1$-$240_4$ as differential voltages, amplified by the differential amplifiers and digitally converted by the ADCs before onward processing by the memory, processor and controller 140. Correlated Double Sampling (CDS) measurements may be conducted to minimise kTC noise contribution from the reset voltage Vrst (reference voltage). Samples of the reset voltage and corresponding pixel voltages may be stored on an analog storage device, such as one at the amplifier, and then subtracted from the readout pixel charge signal prior to digital conversion to achieve CDS subtraction in the analog domain, or samples of the reset voltage may be converted individually and subtracted from the readout pixel charge signal in the digital domain.

Various specific examples of the present disclosure will now be described in detail in relation to Figures 5 to 10.

Figure 5 shows a chip architecture in accordance with an example of the present disclosure. There may be 1024x1024 useable pixels and may utilise digital delay locked loop distributed clock switching. The specific way in which charges may accumulate on a pixel and are read out are described in further detail in relation to Figures 7 to 10.

Figure 6 shows a pixel schematic and timing diagram. The "In Pixel Memory" A and B of Figure 6 may be equivalent to the "Cpixels" A and B of Figure 4, and these represent the different areas of a differential pixel.

As shown in Figure 6, the memories are reset at the beginning of the timing diagram. During the "Integration" period, charge accumulates on the pixels. During the "Row Reset" period, a subset of a plurality of rows is reset, leaving some rows with accumulated charge from the "Integration" period remaining as stored charge. For those rows that are not reset, the charge that is read out during the sampling periods is accumulative over two integration settings rather than one integration setting.

In Figure 6, PGA and PGB are not included in the timing diagram but are part of the "CLOCKS, LIGHT" line. The current of the photodiode is directed to the left (A) or right (B) paths. After the one or more integration periods, the row is reset and, afterwards, the charge stored in "In pixel memory" is read through Bitline A and B for "InPixelMemory" A and B, respectively. The timing diagram of Figure 6 indicates that the difference between INTA and INTB is sampled, or alternatively INTA and INTB may be digitised separately. In the example where the charge integrated in A and B is subtracted in the analog domain and this difference is digitised and, therefore, processed, the scheme is more restrictive than when the charge integrated in A and B is digitised separately, since more creative processing can be done in the digital domain.

Figure 7 shows an example of the present disclosure whereby a pixel array comprises a first row and a second row, with a single pixel in each the first row and the second row being shown schematically for illustrative purposes. The pixel of Figure 7 may have a single-ended pixel readout design, as illustrated by the A memory of the first row and the second row. Alternatively, the pixel of Figure 7 may have a differential pixel design, whereby the subtraction of charges between the two sides of the pixel is done in the analog domain such that a single charge is resultant in the form of the A memory. [Note that "Charge A" in Figure 7 does not directly correspond with the charge in "CpixelA" in Figure 4. Instead, it corresponds with the difference between "CpixelA" and "CpixelB" in Figure 4, for which the subtraction has been done in the analog domain.]

Moving from left to right in Figure 7 shows the charge stored in the A memory at various time instances of the accumulation process. At the beginning, both the first row and the second row have been reset and no charge is stored in the A memory of the respective pixel of the first row or the second row.

For a first time period, charge is accumulated using a first integration setting in both the pixel of the first row and the pixel of the second row, and after the first time period, the charge accumulated in the A memory of the first row is Charge A with the first integration setting (OA1) and the charge accumulated in the A memory of the second row is Charge A with the first integration setting (EA1). [O in this example refers to odd whereas E refers to even, since the first row may be an odd row and the second row may be an even row, but it is appreciated that the present disclosure may be equally applicable to the case whereby the first row may be an even row and the second row may be an odd row.] At the time that the first time period has elapsed, the odd row is reset, such that the content of the A memory of the first row has been flushed and is therefore nothing and the content of the A memory of the second row remains Charge A with the first integration setting (EA1).

For a second time period, charge is accumulated using a second integration setting in both the pixel of the first row and the pixel of the second row, and after the second time period, the charge accumulated in the A memory of the first row is Charge A with the second integration setting (OA2) and the charge accumulated in the A memory of the second row is Charge A with the first integration setting plus the second integration setting (EA1+EA2).

In other words, whilst the A memory of the first row only contains the charge that has been accumulated during the second time period with the second integration setting, the A memory of the second row contains the charge that has been accumulated during the first time period with the first integration setting as well as the charge that has been accumulated during the second time period with the second integration setting. This is the set of charge samples that is read out after the second time period has elapsed (OA2 and EA1+EA2). The set of charge samples is used to approximate Charge A with the first integration setting (OA1) on the first row by subtracting Charge A with the second integration setting (OA2) from Charge A with the first integration setting plus the second integration setting (EA1+EA2) on the second row. By making an assumption that OA2 and EA2 are approximately the same, since the first row and the second row are adjacent one another, it is possible to approximate OA1, i.e. the charge accumulated on the first row after the first time period, which is also assumed to be approximately the same as EA1, i.e. the charge accumulated on the second row after the first time period.

In Figure 7, the odd rows only contain the second integration setting whereas the even rows contain both the first integration setting and the second integration setting. The first and second integration settings may be a first phase and a second phase of the emitted laser light over which accumulation occurs, respectively. Since the first phase and the second phase are different, information from two types of integration settings is available for one read out. Phase unwrapping may be used to determine the depth map/depth frame of the image. The above example as well as those of Figures 8 and 9 are particularly advantageous for imaging moving objects since reduced read out time leads to reduced blurring in the image frame.

Figure 8 shows a similar example of the present disclosure to Figure 7 whereby a pixel array comprises a first row and a second row, with a single pixel in each the first row and the second row being shown schematically for illustrative purposes. The pixel of Figure 8 has a differential pixel readout design, as illustrated by the A memory and the B memory of the first row and the second row, respectively. The A memory and the B memory are accessed in the analog domain before they are subtracted from one another.

The above description of OA1, EA1, OA2 and EA2, charges stored in the A memory, in relation to Figure 7 equally applies to Figure 8. Additionally, OB1, EB1, OB2 and EB2, charges stored in the B memory are described in relation to Figure 8. As can be seen from Figure 8, OB1, EB1, OB2 and EB2 are used in the same way as OA1, EA1, OA2 and EA2 to approximate OB1 and/or EB1.

Figure 9 shows another example of the present disclosure whereby a pixel array comprises a first row and a second row, with a single pixel in each the first row and the second row being shown schematically for illustrative purposes. The pixel of Figure 9 has a differential pixel readout design, as illustrated by the A memory and the B memory of the first row and the second row, respectively.

By using a checkerboard arrangement of areas of the pixels or two or more of the differential pixel, advantageously, aliasing is reduced when edges cross the two or more areas of the differential pixel when the borders are larger than two pixels. In particular, when edges cross the two or more areas of the pixels or two or more of the differential pixel between the first integration and then second integration, then aliasing may be reduced.

Figure 10 shows a similar example of the present disclosure to Figure 8 whereby a pixel array comprises a first row and a second row, with a single pixel in each the first row and the second row being shown schematically for illustrative purposes. The pixel of Figure 10 has a differential pixel readout design, as illustrated by the A memory and the B memory of the first row and the second row, respectively.

A difference between Figures 8 and 10 is that in Figure 10 the integration times are very different which increases the dynamic range of the imaging sensor. The odd rows may be optimised for high reflective objects and the even rows may be optimised for low reflective or distant objects, or vice versa.

Another difference between Figures 8 and 10 is that in Figure 10 the same integration setting is used. The first integration setting of Figure 10 is a first phase of the emitted laser light over which accumulation occurs. By using different integration times but the same integration setting, information of the first accumulation and the second accumulation may be determined in the knowledge of their relative accumulation times. Thus, high dynamic range on a 3D signal may be achieved.

Figure 11 represents example method steps 100 according to an aspect of the present disclosure. In general, at step S110, at least a first row and a second row of the plurality of rows are reset. The first row and the second row are adjacent one another in the pixel array. At step S120, charge in the pixels of the pixel array is accumulated using a first integration setting for a first time period. At step S130, the first row of the plurality of rows is reset. At step S140, charge in the pixels of the pixel array is accumulated using the first integration setting or a second integration setting for a second time period subsequent to the first period of time so as to accumulate charge in the pixels. At step S150, a set of charge samples is read out, wherein the first row contains a first charge from accumulating after the second time period and the second row contains a second charge from accumulating after the first and second time periods. Finally, the set of charge samples are used to approximate a charge from sampling after the first time period.

Figure 12 represents example method steps 200 according to an aspect of the present disclosure. At step S210, at least a first row and a second row of the plurality of rows are reset. The first row and the second row are adjacent one another in the pixel array. At step S220, charge in the pixels of the pixel array is accumulated a first integration setting for a first time period. At step S230, the first row of the plurality of rows is reset. At step S240, charge in the pixels of the pixel array is accumulated using the first integration setting or a second integration setting for a second time period subsequent to the first time period. At step S250, a set of charge samples is read out, wherein the first row contains a first charge from accumulating after the second time period and the second row contains a second charge from accumulating after the first and second time periods. Finally, at step 260, the set of charge samples is used to approximate a charge from sampling after the first time period by subtracting the second charge from the first charge to approximate the charge accumulated on the first row after the first time period.

The skilled person will readily appreciate that various alterations or modifications may be made to the above described aspects of the disclosure without departing from the scope of the disclosure. For example, features of two or more of the above examples may be combined and still fall within the scope of the present disclosure.

The image sensors described above may be a single-ended pixel or differential pixel define (for example, a CMOS single ended or differential sensor design). Therefore, it will be appreciated that each pixel readout may either be single ended or differential.

Numbered aspects

By way of non-limiting example, some aspects of the disclosure are set out in the following numbered clauses.

Numbered clause 1. A continuous wave time of flight, CW-ToF, camera system comprising:

a laser for emitting laser light;
an imaging sensor, the image sensor comprising a pixel array for accumulating charge based on incident light comprising reflected laser light off an object, the pixel array comprising a plurality of rows of pixels; and
a control system coupled to the imaging sensor and configured to control the pixel array to:

> reset at least a first row and a second row of the plurality of rows, wherein the first row and the second row are adjacent one another in the pixel array;
> accumulate charge in the pixels of the pixel array using a first integration setting for a first time period;
> reset the first row of the plurality of rows;
> accumulate charge in the pixels of the pixel array using the first integration setting or a second integration setting for a second time period subsequent to the first time period;
> read out a set of charge samples, wherein the first row contains a first charge from accumulating after the second time period and the second row contains a second charge from accumulating after the first and second time periods; and
> use the set of charge samples to approximate a charge from sampling after the first time period.

Numbered clause 2. The CW-ToF camera system of numbered clause 1,

> wherein pixels of the first row and pixels of the second row are differential pixels each having two or more areas that accumulate charge during different accumulation periods; and
> wherein the two or more areas of each pixel are driven by a common clock.

Numbered clause 3. The CW-ToF camera system of numbered clause 1 or 2, wherein the first integration setting is a first phase of the emitted laser light over which accumulation occurs.
Numbered clause 4. The CW-ToF camera system of any preceding numbered clause, wherein the second integration setting is a second phase of the emitted laser light over which accumulation occurs.
Numbered clause 5. The CW-ToF camera system of any preceding numbered clause, wherein, when accumulating using the second integration setting for the second time period, the first time period and the second time period are substantially equal to one another.
Numbered clause 6. The CW-ToF camera system of any preceding numbered clause, wherein, when accumulating using the first integration setting for the second time period, the first time period is larger than the second time period.
Numbered clause 7. The CW-ToF camera system of any preceding numbered clause, wherein the control system is configured to control the pixel array to subtract the second charge from the first charge to approximate the charge accumulated on the first row after the first time period.
Numbered clause 8. The CW-ToF camera system of numbered clause 7, wherein the control system is configured to control the pixel array to approximate a charge accumulated on the second row after the first and second time periods, respectively, to be substantially the same as the charge accumulated on the first row after the first time period.
Numbered clause 9. The CW-ToF camera system of any preceding numbered clause, wherein the pixel array comprises a third row and a fourth row, the control system is configured to control the third row and the fourth row in the same way as the first row and the second row, respectively, and the control system is further configured to interpolate the first row and the third row to approximate charge accumulated on the second row after the first and second time periods, respectively.
Numbered clause 10. The CW-ToF camera system of any preceding numbered clause, wherein the two or more areas of the pixels or two or more of the pixels of the first row and the two or more areas of the pixels or two or more of the pixels of the second row are arranged in a checkerboard pattern.
Numbered clause 11. A method of reading out a pixel array of an imaging sensor of a continuous wave time of flight, CW-ToF, camera system, the pixel array comprising a plurality of rows of pixels, the method comprising:

> resetting at least a first row and a second row of the plurality of rows, wherein the first row and the second row are adjacent one another in the pixel array;
> accumulating charge in the pixels of the pixel array using a first integration setting for a first time period;
> resetting the first row of the plurality of rows;
> accumulating charge in the pixels of the pixel array using the first integration setting or a second integration setting for a second time period subsequent to the first time period;
> reading out a set of charge samples, wherein the first row contains a first charge from accumulating after the second time period and the second row contains a second charge from accumulating after the first and second time periods; and
> using the set of charge samples to approximate a charge from sampling after the first time period.

Numbered clause 12.The method of numbered clause 11,

wherein pixels of the first row and pixels of the second row are differential pixels each having two or more areas that accumulate charge during different accumulation periods; and
wherein the two or more areas of each pixel are driven by a common clock.

Numbered clause 13.The method of numbered clause 11 or 12, wherein the first integration setting is a first phase of the emitted laser light over which accumulation occurs.

Numbered clause 14.The method of any of numbered clauses 11 to 13, wherein the second integration setting is a second phase of the emitted laser light over which accumulation occurs.

Numbered clause 15.The method of any of numbered clauses 11 to 14, wherein, when accumulating using the second integration setting for the second time period, wherein the first time period and the second time period are substantially equal to one another.

Numbered clause 16.The method of any of numbered clause 11 to 15, wherein, when accumulating using the first integration setting for the second time period, the first time period is larger than the second time period.

Numbered clause 17.The method of any of numbered clause 11 to 16, further comprising subtracting the second charge from the first charge to approximate the charge accumulated on the first row after the first time period. Numbered clause 18.The method of any of numbered clauses 11 to 17, further comprising approximating a charge accumulated on the second row after the first and second time periods, respectively, to be substantially the same as the charge accumulated on the first row after the first time period.

Numbered clause 19.The method of any of numbered clauses 11 to 18, wherein the pixel array comprises a third row and a fourth row, and the method further comprises controlling the third row and the fourth row in the same way as the first row and the second row, respectively, and interpolating the first row and the third row to approximate charge accumulated on the second row after the first and second time periods, respectively.

Numbered clause 20.The method of any of numbered clauses 11 to 19, further comprising changing the integration setting of the first row and/or the second row.

Numbered clause 21.A method of reading out pixel array of an imaging sensor of a continuous wave time of flight, CW-ToF, camera system, the pixel array comprising a plurality of rows of pixels, the method comprising:

resetting at least a first row and a second row of the plurality of rows, wherein the first row and the second row are adjacent one another in the pixel array;
accumulating charge in the pixels of the pixel array using a first integration setting for a first time period;
resetting the first row of the plurality of rows;
accumulating charge in the pixels of the pixel array using the first integration setting or a second integration setting for a second time period subsequent to the first time period;
reading out a set of charge samples, wherein the first row contains a first charge from accumulating after the second time period and the second row contains a second charge from accumulating after the first and second time periods; and
using the set of charge samples to approximate a charge from sampling after the first time period by subtracting the second charge from the first charge to approximate the charge accumulated on the first row after the first time period.

**Claims**

1. A continuous wave time of flight, CW-ToF, camera system comprising:

a laser for emitting laser light;
an imaging sensor, the image sensor comprising a pixel array for accumulating charge based on incident light comprising reflected laser light off an object, the pixel array comprising a plurality of rows of pixels; and
a control system coupled to the imaging sensor and configured to control the pixel array to:

reset at least a first row and a second row of the plurality of rows, wherein the first row and the second row are adjacent one another in the pixel array;
accumulate charge in the pixels of the pixel array using a first integration setting for a first time period;
reset the first row of the plurality of rows;
accumulate charge in the pixels of the pixel array using the first integration setting or a second integration setting for a second time period subsequent to the first time period;
read out a set of charge samples, wherein the first row contains a first charge from accumulating after the second time period and the second row contains a second charge from accumulating after the first and second time periods; and

use the set of charge samples to approximate a charge from sampling after the first time period.

2. The CW-ToF camera system of claim 1,

wherein pixels of the first row and pixels of the second row are differential pixels each having two or more areas that accumulate charge during different accumulation periods; and
wherein the two or more areas of each pixel are driven by a common clock.

3. The CW-ToF camera system of claim 1 or 2, wherein the first integration setting is a first phase of the emitted laser light over which accumulation occurs and/or wherein the second integration setting is a second phase of the emitted laser light over which accumulation occurs.

4. The CW-ToF camera system of any preceding claim, wherein, when accumulating using the second integration setting for the second time period, the first time period and the second time period are substantially equal to one another and/or wherein, when accumulating using the first integration setting for the second time period, the first time period is larger than the second time period.

5. The CW-ToF camera system of any preceding claim, wherein the control system is configured to control the pixel array to subtract the second charge from the first charge to approximate the charge accumulated on the first row after the first time period, preferably wherein the control system is configured to control the pixel array to approximate a charge accumulated on the second row after the first and second time periods, respectively, to be substantially the same as the charge accumulated on the first row after the first time period.

6. The CW-ToF camera system of any preceding claim, wherein the pixel array comprises a third row and a fourth row, the control system is configured to control the third row and the fourth row in the same way as the first row and the second row, respectively, and the control system is further configured to interpolate the first row and the third row to approximate charge accumulated on the second row after the first and second time periods, respectively.

7. The CW-ToF camera system of any preceding claim, wherein the two or more areas of the pixels or two or more of the pixels of the first row and the two or more areas of the pixels or two or more of the pixels of the second row are arranged in a checkerboard pattern.

8. A method of reading out a pixel array of an imaging sensor of a continuous wave time of flight, CW-ToF, camera system, the pixel array comprising a plurality of rows of pixels, the method comprising:

resetting at least a first row and a second row of the plurality of rows, wherein the first row and the second row are adjacent one another in the pixel array;
accumulating charge in the pixels of the pixel array using a first integration setting for a first time period;
resetting the first row of the plurality of rows;
accumulating charge in the pixels of the pixel array using the first integration setting or a second integration setting for a second time period subsequent to the first time period;
reading out a set of charge samples, wherein the first row contains a first charge from accumulating after the second time period and the second row contains a second charge from accumulating after the first and second time periods; and
using the set of charge samples to approximate a charge from sampling after the first time period.

9. The method of claim 8,

wherein pixels of the first row and pixels of the second row are differential pixels each having two or more areas that accumulate charge during different accumulation periods; and
wherein the two or more areas of each pixel are driven by a common clock.

10. The method of claim 8 or 9, wherein the first integration setting is a first phase of the emitted laser light over which accumulation occurs and/or wherein the second integration setting is a second phase of the emitted laser light over which accumulation occurs.

11. The method of any of claims 8 to 10, wherein, when accumulating using the second integration setting for the second time period, wherein the first time period and the second time period are substantially equal to one another and/or wherein, when accumulating using the first integration setting for the second time period, the first time period is larger than the second time period.

12. The method of any of claims 8 to 11, further comprising subtracting the second charge from the first charge to approximate the charge accumulated on the first row after the first time period.

13. The method of any of claims 8 to 12, further comprising approximating a charge accumulated on the second row after the first and second time periods, respectively, to be substantially the same as the charge accumulated on the first row after the first time period.

14. The method of any of claims 8 to 13, wherein the pixel array comprises a third row and a fourth row, and the method further comprises controlling the third row and the fourth row in the same way as the first row and the second row, respectively, and interpolating the first row and the third row to approximate charge accumulated on the second row after the first and second time periods, respectively.

15. The method of any of claims 8 to 14, further comprising changing the integration setting of the first row and/or the second row.

FIG. 1

FIG. 2

FIG. 3

FIG. 4

FIG. 5

FIG. 6

Integration

| all row reset | Int settings 1 | Odd row reset | Int settings 2 |
|---|---|---|---|

**First row**
Content of A
memory

**Second row**
Content of A
memory

| Nothing | Charge A with setting 1 (OA1) | Nothing | Charge A with setting 2 (OA2) |
|---|---|---|---|
| Nothing | Charge A with setting 1 (EA1) | Charge A with setting 1 (EA1) | EA1 + Charge A with setting 2 (EA1+EA2) |

FIG. 7

Integration

| all row reset | Int settings 1 | Odd row reset | Int settings 2 |

**First row**
Content of A memory

**Second row**
Content of A memory
Content of B memory

| | all row reset | Int settings 1 | Odd row reset | Int settings 2 |
|---|---|---|---|---|
| Content of A memory | Nothing | Charge A with setting 1 (OA1) | Nothing | Charge A with setting 2 (OA2) |
| Content of B memory | Nothing | Charge B with setting 1 (OB1) | Nothing | Charge B with setting 2 (OB2) |
| Content of A memory | Nothing | Charge A with setting 1 (EA1) | Charge A with setting 1 (EA1) | EA1 + Charge A with setting 2 (EA1+EA2) |
| Content of B memory | Nothing | Charge B with setting 1 (EB1) | Charge B with setting 1 (EB1) | EB1+Charge B with setting 2 (EB1+EB2) |

FIG. 8

Odd Col
Even Col
Col

Even row
Odd row

Integration

| | all row reset | Int settings 1 | Odd row reset | Int settings 2 |
|---|---|---|---|---|
| **Even rows/Even Col** | | | | |
| A memory | Nothing | Charge A with setting 1 (EEA1) | Charge A with setting 1 (EEA1) | EEA1 + Charge A with setting 2 (EEA1+EEA2) |
| B memory | Nothing | Charge B with setting 1 (EEB1) | Charge A with setting 1 (EEB1) | EEA1+Charge A with setting 1 (EEB1+EEB2) |
| **Even rows/Odd Col** | | | | |
| A memory | Nothing | Charge A with setting 1 (EOA1) | Nothing | Charge A with setting 2 (EOA2) |
| B memory | Nothing | Charge B with setting 1 (EOB1) | Nothing | Charge B with setting 2 (EOB2) |
| **Odd rows/Even Col** | | | | |
| A memory | Nothing | Charge A with setting 1 (OEA1) | Nothing | Charge A with setting 2 (OEA2) |
| B memory | Nothing | Charge B with setting 1 (OEB1) | Nothing | Charge B with setting 2 (OEB2) |
| **Odd rows/Odd Col** | | | | |
| A memory | Nothing | Charge A with setting 1 (OOA1) | Charge A with setting 1 (OOA1) | OOA1 + Charge A with setting 2 (OOA1+OOA2) |
| B memory | Nothing | Charge B with setting 1 (OOB1) | Charge A with setting 1 (OOB1) | OOA1+Charge A with setting 1 (OOB1+OOB2) |

FIG. 9

Integration
90+10=100uS

90uS -> 9/10th          10uS -> 1/10th

| all row reset | Int settings 1 | Odd row reset | Int settings 1 |
|---|---|---|---|

**Odd rows**

Content of A memory
Content of B memory

| Nothing | Charge A with setting 1 (9/10 OA1) | Nothing | Charge A with setting 1 (1/10 OA2) |
|---|---|---|---|
| Nothing | Charge B with setting 1 (9/10 OB1) | Nothing | Charge B with setting 1(1/10 OB2) |

**Even rows/Even Col**

Content of A memory
Content of B memory

| Nothing | Charge A with setting 1 (9/10 EA1) | Charge A with setting 1 (EA1) | 9/10 EA1 + Charge A with setting 1 (9/10 + 1/10 EA1) |
|---|---|---|---|
| Nothing | Charge B with setting 1 (9/10 EB1) | Charge A with setting 1 (EB1) | 9/10 EB1 + Charge A with setting 1 (9/10 + 1/10 EB1) |

FIG. 10

100

S110

Reset at least a first row and a second row of the plurality of rows

S120

Accumulate charge in the pixels of the pixel array using a first integration setting for a first time period

S130

Reset the first row of the plurality of rows

S140

Accumulate charge in the pixels of the pixel array using the first integration setting or a second integration setting for a second time period subsequent to the first time period

S150

Read out a set of charge samples, wherein the first row contains a first charge from accumulating after the second time period and the second row contains a second charge from accumulating after the first and second time periods

S160

Use the set of charge samples to approximate a charge from sampling after the first time period

FIG. 11

200

S210

Reset at least a first row and a second row of the plurality of rows

S220

Accumulate charge in the pixels of the pixel array using a first integration setting for a first time period

S230

Reset the first row of the plurality of rows

S240

Accumulate charge in the pixels of the pixel array using the first integration setting or a second integration setting for a second time period subsequent to the first time period

S250

Read out a set of charge samples, wherein the first row contains a first charge from accumulating after the second time period and the second row contains a second charge from accumulating after the first and second time periods

S260

Use the set of charge samples to approximate a charge from sampling after the first time period by subtracting the second charge from the first charge to approximate the charge accumulated on the first row after the first time period

FIG. 12

Europäisches
Patentamt

European
Patent Office

Office européen
des brevets

# EUROPEAN SEARCH REPORT

Application Number

EP 24 15 8871

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2022/276356 A1 (TUBERT CEDRIC [FR] ET AL) 1 September 2022 (2022-09-01) * paragraphs [0002], [0010], [0012], [0052], [0072], [0128]; figures 3, 7, 8 * | 1-15 | INV. G01S7/4914 G01S7/4915 G01S7/493 G01S17/36 G01S17/894 |
| Y | EP 3 647 813 A1 (INFINEON TECHNOLOGIES AG [DE]) 6 May 2020 (2020-05-06) * paragraphs [0026], [0036]; figure 1 * | 1-15 | |
| A | US 2021/356597 A1 (HURWITZ JONATHAN EPHRAIM DAVID [GB] ET AL) 18 November 2021 (2021-11-18) * paragraph [0006]; figure 1 * | 1-15 | |

TECHNICAL FIELDS
SEARCHED (IPC)

G01S

The present search report has been drawn up for all claims

| Place of search | Date of completion of the search | Examiner |
|---|---|---|
| Munich | 18 July 2024 | Kirscher, Jérôme |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 8871

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2024

| Patent document cited in search report | Publication date | Patent family member(s) | | Publication date |
|---|---|---|---|---|
| US 2022276356 A1 | 01-09-2022 | FR | 3120264 A1 | 02-09-2022 |
| | | US | 2022276356 A1 | 01-09-2022 |
| EP 3647813 A1 | 06-05-2020 | CN | 111200710 A | 26-05-2020 |
| | | EP | 3647813 A1 | 06-05-2020 |
| | | US | 2020132819 A1 | 30-04-2020 |
| US 2021356597 A1 | 18-11-2021 | CN | 113687376 A | 23-11-2021 |
| | | EP | 3910375 A1 | 17-11-2021 |
| | | US | 2021356597 A1 | 18-11-2021 |

EPO FORM P0459

For more details about this annex : see Official Journal of the European Patent Office, No. 12/82